# EUROPÄISCHE PATENTSCHRIFT

(11) **EP 2 935 922 B1**
(45) Veröffentlichungstag und Bekanntmachung des Hinweises auf die Patenterteilung: **13.09.2017**
(21) Anmeldenummer: 13814024.9
(22) Anmeldetag: 13.11.2013
(51) Int. Cl.: F16C 33/78

(54) **LAGER**
BEARING
PALIER

(30) Priorität: 20.12.2012 DE 102012224020
(43) Veröffentlichungstag der Anmeldung: 28.10.2015
(73) Patentinhaber: Schaeffler Technologies AG & Co. KG, 91074 Herzogenaurach (DE)
(72) Erfinder: HARTLING, Otmar, 97453 Schonungen (DE); FICKERT-GUENTHER, Thomas, 96114 Hirschaid (DE); LOMMEL, Manuel, 97508 Grettstadt (DE); KESTLER, Volker, 97469 Gochsheim (DE)
(86) Internationale Anmeldenummer: PCT/DE2013/200297
(87) Internationale Veröffentlichungsnummer: WO 2014/094755

(56) Entgegenhaltungen:
- EP-A2- 0 725 224
- DE-A1- 2 166 874
- DE-A1- 10 234 935
- JP-A- 2004 278 738
- JP-A- 2007 010 114
- JP-A- 2010 043 693
- US-A1- 2007 242 909
- US-B1- 6 402 158

## Beschreibung

### Gebiet der Erfindung

Die Erfindung betrifft ein Lager, insbesondere ein Radial-Wälzlager, umfassend einen Lagerring mit einer durch mindestens einen Hinterstich gebildeten Mantelfläche, sowie mindestens ein Dichtelement mit einem elastomeren Abschnitt und einer elastischen Haltelippe, wobei der elastomere Abschnitt des Dichtelements zumindest abschnittsweise in dem Hinterstich aufgenommen ist.

### Hintergrund der Erfindung

Ein Wälzlager wird zur Lagerung von zueinander beweglichen Bauteilen eingesetzt. Es umfasst im Allgemeinen zwei Lagerringe mit integrierten Laufbahnen. Zwischen den Lagerringen sind Wälzkörper angeordnet, die sich auf den Laufbahnen abwälzen. Um ein Wälzlager bzw. den Lagerinnenraum zwischen den Lagerringen vor Verunreinigungen, Spritzwasser und einem übermäßigen Verlust von Schmierfett zu schützen, wird üblicherweise mindestens ein Dichtelement zwischen den Lagerringen des Wälzlagers eingesetzt.

US 2007/0242909 A1 zeigt ein Wälzlager gemäß dem Oberbegriff des Anspruchs 1. Zur Aufnahme und Befestigung eines Dichtelements weist der Lagerring herkömmlicherweise eine entsprechend ausgestaltete Mantelfläche auf, an welcher das Dichtelement im eingesetzten Zustand zur Anlage kommt. Des Weiteren ist eine axiale Sicherung des Dichtelements an der Mantelfläche des Lagerrings notwendig. Hierbei werden nach dem Einsatz des Dichtelements hohe Forderungen insbesondere an die Formgenauigkeit und an die Maßhaltigkeit von Lagerbohrung und dem Außendurchmesser des Lagerrings gestellt. Eine von Form- und Maßtoleranzen sowohl in axialer als auch in radialer Richtung weitestgehend freie Positionierung eines Dichtelements an einem Lagerring ist wünschenswert.

### Aufgabe der Erfindung

Es ist demnach eine erste Aufgabe der Erfindung, ein Lager anzugeben, welches in der Lage ist, axiale und radiale Toleranzen der zur Abdichtung eines Lagers eingesetzten Lagerkomponenten auszugleichen.

### Zusammenfassung der Erfindung

Die erste Aufgabe der Erfindung wird erfindungsgemäß gelöst durch Lager, insbesondere ein Radial-Wälzlager, umfassend einen Lagerring mit einer durch einen Hinterstich gebildeten Mantelfläche, sowie ein Dichtelement mit einem elastomeren Abschnitt und einer elastischen Haltelippe, wobei der elastomere Abschnitt des Dichtelements zumindest abschnittsweise in dem Hinterstich aufgenommen ist und wobei die Mantelfläche des Hinterstichs eine Kontur mit einem Anlageabschnitt zur Axialsicherung der elastischen Haltelippe aufweist. Die Kontur des Hinterstichs weist hierbei weiterhin eine axiale Anlagefläche auf, an der eine axiale Anlagefläche des elastomeren Abschnitts des Dichtelements flächig anliegt.

Die Erfindung geht von der Tatsache aus, dass durch radiale Verlagerungen eines Dichtelements relativ zum Lagerring axiale Verlagerungen des Dichtelements hervorgerufen werden können. Auch ein Verkippen des Dichtelements bei der Dichtungsmontage kann bislang nicht ausgeschlossen werden.

Weiterhin ist zur Sicherstellung der Dichtfunktion eines Dichtelements in einem Lagerring die Entkopplung der entsprechenden Form- und Maßtoleranzen gewünscht. Dies ist allerdings mit den herkömmlichen Komponenten für die Abdichtung eines Lagers bislang nicht umsetzbar.

Unter Berücksichtigung dieser vorgenannten Problematik erkennt die Erfindung, dass die Forderung an eine toleranzunabhängige Positionierung eines Dichtelements an einem Lagerring dann erfüllt werden kann, wenn die Mantelfläche des Hinterstichs eine Kontur mit einem Anlageabschnitt zur Axialsicherung der elastischen Haltelippe sowie eine axiale Anlagefläche aufweist, an der eine axiale Anlagefläche des elastomeren Abschnitts des Dichtelements flächig anliegt. Der Anlageabschnitt verhindert den Abzug des Dichtelements entgegen der Einbaurichtung ebenso wie ein axiales Verschieben oder ein Verkippen des Dichtelements, wodurch eine axial gesicherte Positionierung eines in einen Lagerring eingesetzten Dichtelements unbeeinflusst von möglichen axialen und/oder radialen Toleranzen der Lagerkomponenten ermöglicht wird.

Im Einbauzustand des Dichtelements in dem Hinterstich des Lagerrings kommt die elastische Haltelippe an dem Anlageabschnitt des Lagerrings in vorgespannte Anlage. Durch die Kombination der vorgespannten Haltelippe und der flächigen Anlage des elastomeren Abschnitts des Dichtelements an der axialen Anlagefläche der durch den Hinterstich gebildeten Kontur wird das von Toleranzen weitgehend freie Halten des Dichtkörpers im Hinterstich des Lagerrings ermöglicht. Zusätzlich ist das Dichtelement formschlüssig und abzugssicher an der Mantelfläche des Lagerrings angeordnet.

Die radiale Führung des Dichtelements erfolgt so im Wesentlichen über den elastischen Teil der Haltelippe. Durch die elastische Ausbildung der Haltelippe kann sich diese insbesondere an den Lagerring bzw. an die Kontur in der Mantelfläche des Hinterstichs anpassen. Auf diese Weise kann die Positionierung des Dichtelements an einem Lagerring unabhängig von den radialen und den axialen Maß- und Formtoleranzen der jeweiligen Dichtkomponenten erfolgen, die Gesamttoleranzen des Dichtelements und des Lagerrings sind voneinander entkoppelt. Durch diese toleranzunempfindliche Kombination werden vorgegebene Formtoleranzen, wie beispielsweise Rundheit oder Geradheit, sowie die vorhandenen Maßtoleranzen am Lagerring sowohl während als auch nach der Montage des Dichtelements im Hinterstich des Lagerrings nicht oder nur unwesentlich beeinflusst.

Mit anderen Worten wird eine axial unverlierbare und gegen Toleranzen gesicherte formschlüssige Positionierung eines Dichtelements an einem Lagerring ermöglicht.

Der Hinterstich zur Positionierung des Dichtelements ist insbesondere als ein Einstich in den Lagerring eingebracht, wobei zur Herstellung beispielsweise ein Stechdrehen als spanendes Fertigungsverfahren eingesetzt wird. Die Einbringung des Hinterstichs ist insbesondere aufgrund der Formgebung des Hinterstichs einfach durchführbar.

Die axiale Anlagefläche der Kontur ist nicht geneigt und ermöglicht so die flächige Anlage des eingesetzten Dichtelements. So kann auch bei einer radialen Verlagerung des Dichtelements eine axiale Verschiebung oder ein Verkippen des Dichtelements verhindert und dessen sichere Positionierung gewährleistet werden.

Das Dichtelement umfasst vorliegend neben dem elastomeren Abschnitt und der elastischen Haltelippe insbesondere einen Dichtkörper mit einem Versteifungselement und einer elastomeren Komponente. Das Dichtelement des Wälzlagers ist insbesondere zwischen dem inneren Lagerring und dem äußeren Lagerring eingesetzt, wobei die Befestigung des Dichtelements an einem der beiden Lagerringe über einen im Wesentlichen statischen Dichtteil erfolgt. Der Abschnitt des Dichtelements, an welchem der im Wesentlichen statische Dichtteil des Dichtelements ausgebildet ist, kann hierbei sowohl in der Mantelfläche eines inneren Lagerrings als auch in der Mantelfläche eines äußeren Lagerrings eingebracht sein. Der dynamische Abschnitt des Dichtelements kann den Lagerinnenraum, beispielsweise unter Ausbildung einer Spaltdichtung und/oder einer schleifenden Dichtung, gegenüber dem anderen der beiden Lagerringe abdichten.

In der Erfindung weist der Anlageabschnitt der Kontur einen Absatz auf, der die elastische Haltelippe des Dichtelements zu dessen Axialsicherung übergreift. Die Haltelippe bzw. insbesondere deren radial elastischer Endabschnitt wird von dem Absatz in axialer Richtung übergriffen und dort axial abgestützt. So kann das Dichtelement bei der Montage im Hinterstich einrasten, wenn die Haltelippe den Absatz passiert hat.

Auf diese Weise kommt eine axial formschlüssige Verbindung zwischen dem Dichtelement und dem Lagerring zustande, welche zum einen den Abzug des Dichtelements gegen die Einbaurichtung sowie zugleich dessen Verkippen verhindert. Der Absatz kann hierzu beispielsweise mit einer axialen Anlagefläche ausgebildet sein, an welcher die Haltelippe im Einbauzustand flächig anliegt. Mit anderen Worten dient der Absatz als eine Abzugssicherung für das Dichtelement entgegen der Einbaurichtung.

Somit kann durch die Kombination des Absatzes und der axialen Anlagefläche der Kontur des Hinterstichs auf einfache Weise eine sichere Positionierung des Dichtelements zwischen den Lagerringen eines Wälzlagers gewährleistet werden. Weiterhin ist das Dichtelement durch die elastische Haltelippe gegenüber Maß- und Formtoleranzen der Komponenten unempfindlich aufgenommen.

In der Erfindung ist der Hinterstich mit einer radialen Freistellung ausgebildet. Die radiale Freistellung verhindert einen massiven Kontakt zwischen dem elastomeren Abschnitt des Dichtelements und der Kontur des Hinterstichs. Auf diese Weise wird ein Spalt zwischen dem elastomeren Abschnitt und der Kontur eingehalten, der als sogenannte Federweg-Reserve dient und Toleranzen, wie beispielsweise Rundheitsfehler, sowohl des Hinterstichs als auch des Dichtelements ausgleicht. Der Anlageabschnitt geht unmittelbar in die radiale Freistellung über. Der Anlageabschnitt ist hierbei im Wesentlichen geneigt. Diese Ausgestaltung ermöglicht eine einfache Herstellung des Hinterstichs bzw. dessen Kontur durch eine Reduzierung der Formkomplexität.

In der Erfindung ist zwischen dem Absatz des Anlageabschnitts und der radialen Freistellung zusätzlich ein radialer Absatz ausgebildet. Der radiale Absatz ist vorzugsweise in Form einer Stufe in die Kontur eingebracht und ermöglicht eine Ausbildung der radialen Freistellung mit der benötigten radialen Tiefe, die wenigstens 0,01 mm beträgt.

Insgesamt kann durch alle vorgenannten Ausgestaltungen des Übergangs des Anlageabschnitts in die radiale Freistellung die Positionierung des Dichtelements an einem Lagerring unabhängig von den radialen und den axialen Maß- und Formtoleranzen der jeweiligen zur Abdichtung eines Lagerinnenraums eingesetzten Komponenten erfolgen. Weiterhin wird bei allen Ausgestaltungen ein massiver Kontakt zwischen dem elastomeren Abschnitt des Dichtelements und der Kontur des Hinterstichs verhindert.

In einer weiter vorteilhaften Ausgestaltung der Erfindung geht die axiale Anlagefläche des Hinterstichs in einen Laufbahnabschnitt über. Der Laufbahnabschnitt kann beispielsweise als Laufbahn für in ein Wälzlager eingesetzte Wälzkörper dienen. Insbesondere kann der Laufbahnabschnitt der Führung eines Wälzkörperkäfigs dienen.

In einer besonders vorteilhaften Ausgestaltung der Erfindung ist im Übergangsbereich der axialen Anlagefläche des Hinterstichs in den Laufbahnabschnitt ein umlaufender axialer Kragen ausgebildet. Durch den umlaufenden Kragen wird ein am Lagerring ausgebildeter Bord in axialer Richtung verlängert. Durch diese Verlängerung des Bords wird eine entsprechend vergrößerte Bordfläche bereitgestellt.

Die Bordfläche dient insbesondere der Führung eines Wälzlagerkäfigs. Eine Käfigführung über eine solche Bordfläche wird insbesondere bei schnelllaufenden Wälzlagern eingesetzt, die hohen Beschleunigungen und Drehzahlen standhalten müssen. Hierzu liegt ein Wälzlagerkäfig im eingebauten Zustand in einem Wälzlager mit seiner Oberfläche an der Bordfläche des Lagerrings an. So kann durch eine durch den umlaufenden axialen Kragen bereitgestellte Bordfläche bei optimaler Nutzung des zur Verfügung stehenden Bauraums eine sichere Führung eines Wälzlagerkäfigs erreicht werden. Der axial umlaufende Kragen wird vorzugsweise durch einen Einstich in die Mantelfläche des Lagerrings an diesem ausgebildet.

Zweckmäßigerweise weist das Dichtelement einen Dichtkörper mit einer Armierung auf. Die Armierung ist im Dichtkörper eingesetzt. Der Dichtkörper ist vorzugsweise im Wesentlichen ringförmig ausgebildet. Die Armierung kann ebenfalls als ein Ring, beispielsweise aus einem Stahlblech, gefertigt sein und gewährleistet die nötige Stabilität des Dichtelements für ein Wälzlager im Betrieb. Die elastomere Dichtkomponente des Dichtelements kann beispielsweise ein Kautschuk sein, der um die Armierung gespritzt ist.

Zur Sicherstellung der Dichtfunktion durch die sichere Positionierung eines Dichtelements in einem Lagerring und zur gewünschten Entkopplung der entsprechenden Form- und Maßtoleranzen sind die Abmessungen des Dichtelements und des Lagerrings bzw. der Kontur des Hinterstichs des Lagerrings zweckmäßigerweise aufeinander abgestimmt. Die folgend aufgeführten vorteilhaften Ausgestaltungen ermöglichen somit die Bereitstellung eines Lagers, welches eine axial unverlierbare und gegen herstellungsbedingte Form- und Maßabweichungen tolerante formschlüssige Positionierung eines Dichtelements an einem Lagerring ermöglicht.

Bevorzugt weist die Armierung einen im Wesentlichen ringförmigen Grundkörper der Materialstärke s, sowie einen nach innen gegen die axiale Anlagefläche des Hinterstichs gerichteten Armierungsabschnitt auf, wobei der Krümmungsradius R am Übergang zwischen dem Grundkörper und dem Armierungsabschnitt in einem Bereich zwischen 0,2 mm und 2·s liegt. Der Krümmungsradius R kann somit in Abhängigkeit von der Materialstärke der Armierung bzw. des Grundkörpers der Armierung gewählt werden.

Auch die Dicke y der elastischen Haltelippe kann insbesondere in Abhängigkeit von der Materialstärke der Armierung gewählt sein. Bevorzugt liegt die Dicke y der elastische Haltelippe des Dichtelements in einem Bereich zwischen 0,15 mm und 1,2·s.

Zweckmäßigerweise liegt die radiale Dicke d des elastomeren Abschnitts des Dichtelements in einem Bereich zwischen 1,5·s und 4,5·s. Somit kann auch die radiale Dicke d insbesondere in Abhängigkeit von der Materialstärke des Grundkörpers der Armierung gewählt sein.

Die axiale Dicke t des Übergangsbereich, in welchem der Dichtkörper des Dichtelements in die elastische Haltelippe übergeht, ist insbesondere abhängig von der radialen Dicke des elastomeren Abschnitts des Dichtelements. Vorzugsweise liegt die axiale Dicke t im Übergangsbereich in einem Bereich zwischen 0,5·d und 1·d.

In einer vorteilhaften Ausgestaltung liegt die Einstichbreite Et des Hinterstichs in einem Bereich zwischen 0,8·t und 1,2·t. Die Einstichbreite Et kann somit insbesondere in Abhängigkeit von der axialen Dicke t des Übergangsbereich zwischen dem Dichtkörper und dem Dichtelement gewählt werden.

Bevorzugt hat der Lagerring den Außendurchmesser D, wobei der radiale Abstand a zwischen dem elastomeren Abschnitt des Dichtelements und dem Grund der radialen Freistellung in einem Bereich zwischen 0,03 mm und 0,004·D liegt.

In einer weiter bevorzugten Ausgestaltung ist der Absatz des Anlageabschnitts der Kontur mit einem Abstand X radial zurückversetzt, wobei der Abstand X in einem Bereich zwischen 0,5·y und 1,5·y liegt. Der Abstand X kann somit insbesondere in Abhängigkeit der Dicke y der elastischen Haltelippe des Dichtelements gewählt werden.

Vorteilhafterweise erstreckt sich die Haltelippe im entspannten Zustand mit einem Abstand C radial über den Absatz des Anlageabschnitts und/oder über einen Kontrollpunkt hinaus, wobei der Abstand C in einem Bereich zwischen 0,02 mm und 2·y liegt.

Zweckmäßigerweise ist der elastomere Abschnitt des Dichtelements mit einem radialen Abstand b im Hinterstich zurückversetzt, wobei der radiale Abstand b in einem Bereich zwischen 0,03 mm bis 1,25·y liegt.

Vorzugsweise ist das Wälzlager als ein Spindellager, insbesondere zum Einsatz in Werkzeugmaschinen, ausgebildet. Spindellager sind einreihige Schrägkugellager, die massive äußere und innere Lagerringe umfassen, zwischen denen Kugelkränze mit massiven Wälzkörperkäfigen eingesetzt sind. Ein Spindellager findet speziell Anwendung im Werkzeugmaschinenbau, aber auch in anderen Anwendungsgebieten, in denen höchste Anforderungen bezüglich der Genauigkeit bzw. der zulässigen Drehzahl an die Lagerung gestellt werden. Bestens bewährt haben sich Spindellager zur Lagerung der Spindeln bei Werkzeugmaschinen, also von Wellen mit integrierter Schnittstelle zur Aufnahme eines Werkstücks oder eines Werkzeugs.

Der Hinterstich kann grundsätzlich entweder in dem äußeren Lagerring oder in dem inneren Lagerring eingebracht sein. Vorteilhafterweise ist der Hinterstich im äußeren Lagerring eingebracht. Der äußere Lagerring dient somit der axial unverlierbaren und gegen herstellungsbedingte Form- und Maßabweichungen toleranten formschlüssigen Positionierung eines Dichtelements.

Weiter vorteilhaft ist der Hinterstich im inneren Lagerring eingebracht, wobei die Positionierung des Dichtelements am inneren Lagerring unabhängig von den radialen und den axialen Maß- und Formtoleranzen der jeweiligen Dichtkomponenten erfolgt. Hierbei ist zu berücksichtigen, dass bei einem im inneren Lagerring ausgebildeten Hinterstich der Innendurchmesser des inneren Lagerrings bei der Bemaßung zu berücksichtigen ist. So hat bei einem im inneren Lagerring eingebrachten Hinterstich der innere Lagerring den Innendurchmesser d, wobei der radiale Abstand a zwischen dem elastomeren Abschnitt des Dichtelements und dem Grund der radialen Freistellung vorzugsweise in einem Bereich zwischen 0,03 mm und 0,004·d liegt.

### Kurze Beschreibung der Zeichnungen

Im Folgenden wird die Erfindung anhand einer Zeichnung näher erläutert. Dabei zeigen:
- Fig. 1: einen Ausschnitt der Mantelfläche eines nicht erfindungsgemäßen Lagerrings in einem Querschnitt,
- Fig. 2: einen Ausschnitt der Mantelfläche eines weiteren nicht erfindungsgemäßen Lagerrings in einem Querschnitt,
- Fig. 3: einen Ausschnitt der Mantelfläche eines erfindungsgemäßen Lagerrings in einem Querschnitt,
- Fig. 4: einen Ausschnitt des Lagerrings gemäß Fig. 3 mit theoretisch eingesetztem Dichtelement in einem Querschnitt,
- Fig. 5: einen Ausschnitt des Lagerrings gemäß den Fig. 3 und 4 mit dem eingesetzten Dichtelement gemäß Fig. 4 in einem Querschnitt, sowie
- Fig. 6: einen Ausschnitt eines erfindungsgemäßen Lagers mit einem in einen Lagerring eingesetztem Dichtelement in einem Querschnitt.

### Detaillierte Beschreibung der Zeichnungen

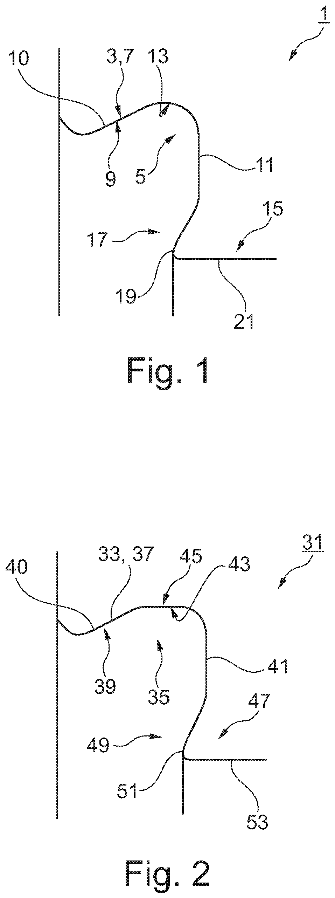

Fig. 1 zeigt einen Ausschnitt eines Lagerrings 1 zur Aufnahme eines Dichtelements in einem Querschnitt. Der Lagerring 1 weist eine Mantelfläche 3 auf, die durch einen Hinterstich 5 gebildet ist. Im montierten Zustand kann ein Dichtelement, bzw. insbesondere der elastomere Abschnitt eines Dichtelements zumindest abschnittsweise in diesem Hinterstich 5 positioniert werden und an der Mantelfläche 3 zur Anlage kommen. Der Hinterstich 5 ist vorliegend als ein Einstich mittels eines Stechdrehens in den Lagerring 1 eingebracht.

Zur Positionierung eines Dichtelements ist die Mantelfläche 3 des Hinterstichs 5 hierzu mit einer entsprechenden Kontur 7 ausgebildet. Die Kontur 7 umfasst einen Anlageabschnitt 9 zur Axialsicherung eines eingesetzten Dichtelements, einen Kontrollpunkt 10 am Anlageabschnitt 9, sowie eine axiale Anlagefläche 11, die ein Verkippen des Dichtelements verhindert.

Im entspannten Zustand erstreckt sich die Haltelippe eines theoretisch eingesetzten Dichtelements mit einem Abstand C radial über den Kontrollpunkt 10 des Anlageabschnitts 9 hinaus.

Der Anlageabschnitt 9 der Kontur 7 ist gegen die Einbaurichtung in radialer Richtung geneigt und geht unmittelbar in eine radiale Freistellung 13 über. Durch die Neigung des Anlageabschnitts 9 wird gewährleistet, dass ein eingesetztes Dichtelement axial formschlüssig am Anlageabschnitt 9 bzw. an der Mantelfläche 3 des Hinterstichs 5 positioniert werden kann. Die radiale Freistellung 13 wiederum verhindert einen massiven Kontakt zwischen dem Dichtelement und der Kontur 7 des Hinterstichs 5. Auf diese Weise wird ein Spalt zwischen dem Dichtelement bzw. dem elastomeren Abschnitt des Dichtelements der Kontur 7 eingehalten, der Toleranzen, wie beispielsweise Rundheitsfehler, sowohl des Hinterstichs 5 als auch des Dichtelements ausgleicht.

Die axiale Anlagefläche 11 hingegen ermöglicht im eingebauten Zustand eines Dichtelements dessen flächige Anlage mit seiner axialen Anlagefläche, so dass ein Verkippen des Dichtelements verhindert wird. Auch ein Abzug des Dichtelements gegen die Einbaurichtung ist aufgrund der Geometrie der Kontur 7 des Hinterstichs 5 nicht möglich.

Insgesamt kann durch die Kombination des Anlageabschnitts 9 mit der axialen Anlagefläche 11 eine axial unverlierbare Positionierung eines Dichtelements an der Mantelfläche 3 des Lagerrings 1 erreicht werden.

Weiterhin ist der Lagerring 1 mit einem Laufbahnabschnitt 15 ausgebildet. Im Übergangsbereich 17 von der axialen Anlagefläche 9 zum Laufbahnabschnitt 15 ist ein umlaufender axialer Kragen 19 ausgebildet. Der Kragen 19 führt zu einer Verlängerung der Bordfläche 21, die sich in axialer Richtung vom Lagerring 1 weg erstreckt. Durch die Verlängerung der Bordfläche 21 kann bei optimaler Nutzung des zur Verfügung stehenden Bauraums eine sichere Führung eines Wälzlagerkäfigs erreicht werden.

In Fig. 2 ist ein Ausschnitt eines weiteren Lagerrings 31 zur Aufnahme eines Dichtelements in einem Querschnitt gezeigt. Der Lagerring 31 umfasst eine Mantelfläche 33, die mittels eines Stechdrehens in den Hinterstich 35 eingebracht ist. Im Einbauzustand kann ein Dichtelement mit einem elastomeren Abschnitt zumindest abschnittsweise in diesem Hinterstich 35 positioniert werden und an der Mantelfläche 33 zur Anlage kommen.

Die Mantelfläche 33 des Hinterstichs 35 ist, wie auch die Mantelfläche 3 gemäß Fig. 1, mit einer entsprechenden Kontur 37 ausgebildet, die einen Anlageabschnitt 39 zur Axialsicherung eines eingesetzten Dichtelements, einen Kontrollpunkt 40 am Anlageabschnitt 39, sowie eine axiale Anlagefläche 41 umfasst. Die axiale Anlagefläche 41 ermöglicht die flächige Anlage eines in dem Hinterstich 35 aufgenommenen Dichtelements mit seiner axialen Anlagefläche, so dass ein Verkippen des Dichtelements verhindert wird.

Auch hier erstreckt sich die Haltelippe eines theoretisch eingesetzten Dichtelements im entspannten Zustand mit einem Abstand C radial über den Kontrollpunkt 40 des Anlageabschnitts 39 hinaus.

Der Anlageabschnitt 39 des Hinterstichs 35 ist in radialer Richtung geneigt, wodurch sichergestellt wird, dass ein eingesetztes Dichtelement abzugssicher entgegen der Einbaurichtung innerhalb des Hinterstichs 35 gehalten ist. Der Anlageabschnitt 39 geht in eine radiale Freistellung 43 über, wobei der Übergang im Unterschied zu Fig. 1 über eine radiale Anlagefläche 45 erfolgt. Die radiale Freistellung 43 ermöglicht einen ausreichend großen Abstand zwischen einem eingesetzten Dichtelement und der Kontur 37 des Hinterstichs 35 des Lagerrings 31, so dass ein harter Kontakt zwischen dem Dichtelement und der Kontur 37 verhindert wird.

Der Lagerring 31 ist mit einem Laufbahnabschnitt 47 ausgebildet. Der im Übergangsbereich 49 der axialen Anlagefläche 43 zum Laufbahnabschnitt 47 ausgebildete umlaufende axiale Kragen 51 führt auch hier zu einer Verlängerung der Bordfläche 53, die sich in axialer Richtung vom Lagerring 31 weg erstreckt. Der Kragen 51 ermöglicht bei optimaler Nutzung des zur Verfügung stehenden Bauraums eine besonders sichere Führung eines Wälzlagerkäfigs.

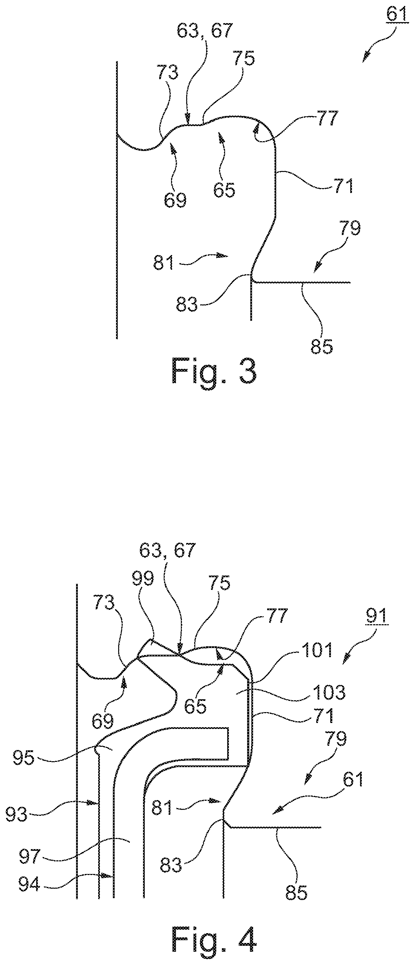

Fig. 3 zeigt den Ausschnitt eines erfindungsgemäßen Lagerrings 61 in einem Querschnitt. Der Lagerring 61 umfasst eine Mantelfläche 63, die durch einen Hinterstich 65 gebildet ist. In diesem Hinterstich 65 kann in montierten Zustand ein Dichtelement positioniert werden. Das Dichtelement bzw. dessen elastomerer Abschnitt kommt dann zumindest abschnittsweise an der Mantelfläche 63 zur Anlage. Der Hinterstich 65 ist als ein Einstich mittels eines Stechdrehens in den Lagerring 61 eingebracht.

Die Mantelfläche 63 ist mit einer entsprechenden Kontur 67 ausgebildet, die sowohl einen Anlageabschnitt 69 als auch eine axiale Anlagefläche 71 für ein Dichtelement umfasst. Die axiale Anlagefläche 71 ermöglicht die flächige Anlage eines eingesetzten Dichtelements und verhindert dessen Verkippen.

Der Anlageabschnitt 69 ist zur axialen Sicherung eines eingesetzten Dichtelements im Unterschied zu den Lagerringen 1, 31 gemäß den Fig. 1 und 2 mit einem Absatz 73 ausgebildet. Der Absatz 73 kann ein eingesetztes Dichtelement bzw. einen Teil des Dichtelements übergreifen und so als Abzugssicherung gegen die Einbaurichtung dienen. So kann das Dichtelement bei der Montage im Hinterstich 65 einrasten, wenn das Dichtelement, bzw. eine elastische Haltelippe des Dichtelements den Absatz 73 passiert hat. Auf diese Weise kommt eine axial formschlüssige Verbindung zwischen dem Dichtelement und dem Lagerring 61 zustande.

Zusätzlich ist die Kontur 67 des Hinterstichs 65 mit einem radialen Absatz 75 ausgebildet, der in Form einer Stufe in die Kontur 67 eingebracht ist. Durch diesen Absatz 75 wird eine radiale Freistellung 77 ausgebildet. Die Freistellung 77 verhindert hierbei den Kontakt zwischen einem eingesetzten Dichtelement und der Mantelfläche 63 des Lagerrings 61. Die radiale Tiefe der Freistellung 77 beträgt vorliegend 0,1 mm.

Der Lagerring weist weiterhin einen Laufbahnabschnitt 79 auf. Der Übergangsbereich 81 des Lagerrings 61 von der axialen Anlagefläche 71 zum Laufbahnabschnitt 79 ist mit einem umlaufenden axialen Kragen 83 ausgebildet. Der Kragen 83 führt zu einer Verlängerung der Bordfläche 85, die sich in axialer Richtung vom Lagerring 61 weg erstreckt. So kann auch bei kleinem Bauraum eine sichere Führung eines Wälzlagerkäfigs erreicht werden.

In Fig. 4 ist ein Ausschnitt eines als Spindellager ausgebildeten Lagers 91 mit dem Lagerring 61 gemäß Fig. 3 und einem theoretisch eingesetzten Dichtelement 93 in einem Querschnitt gezeigt. Hinsichtlich der Beschreibung des Lagerrings 61 wird an dieser Stelle auf die detaillierte Beschreibung gemäß der Fig. 3 und 4 verwiesen.

Das in den Lagerring 61 eingesetzte Dichtelement 93 besteht aus einem Dichtkörper 94 mit einer elastomeren Komponente 95 und einer Armierung 97. Die elastomere Komponente 95 ist um die Armierung 97 gespritzt. Das Dichtelement bzw. die elastomere Komponente 95 des Dichtelements 93 weist zu dessen Axialsicherung eine radial elastische Haltelippe 99 sowie eine axiale Anlagefläche 101 an ihrem elastomeren Abschnitt 103 auf.

Im fest eingesetzten Zustand des Dichtelements 93 in den Lagerring 61 kann die radial elastische Haltelippe 99 an dem Absatz 73 des Anlageabschnitts 69 in vorgespannte Anlage kommen. Die axiale Anlagefläche 101 des Dichtelements 93 liegt dann flächig an der axialen Anlagefläche 71 der Mantelfläche 63 des Lagerrings 61 an. Auf diese Weise kann das Dichtelement 93 axial formschlüssig im Hinterstich 65 des Lagerrings 61 positioniert werden. Weiterhin sind weder beim Dichtelement 93 noch am Hinterstich 65 bzw. an der Kontur 67 des Lagerrings 61 unerwünschte Änderungen der Maß- und Formtoleranzen zu befürchten.

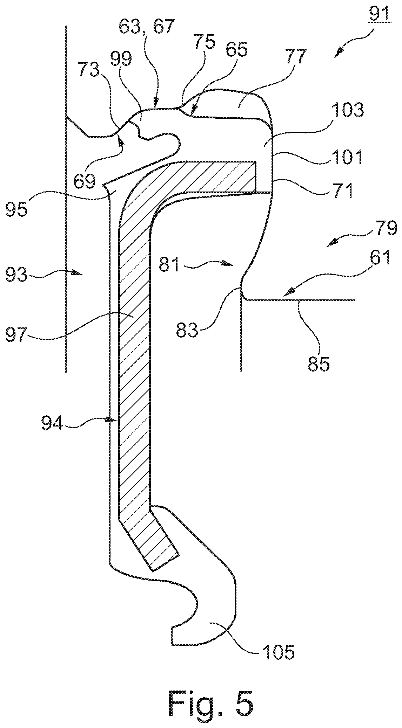

Fig. 5 zeigt den festen Einbau des Dichtelements 93 im Lagerring 61. Die axiale Anlagefläche 101 des Dichtelements 93 liegt flächig an der axialen Anlagefläche 71 der Mantelfläche 63 des Lagerrings 61 an. Die radial elastische Haltelippe 99 liegt wiederum an dem Absatz 73 des Anlageabschnitts 69 vorgespannt an, so dass die radiale Führung des Dichtelements 93 über den radial elastischen Teil der Haltelippe 99 erfolgt. Der Absatz 73 übergreift die Haltelippe 99 hierbei und kann so ein Verschieben des Dichtelements 93 entgegen der Einbaurichtung verhindern.

Die durch den Absatz 75 gebildete radiale Freistellung 77 verhindert ein Aufweiten des Lagerrings 61 durch die Vermeidung eines massiven Kontakts zwischen dem elastomeren Abschnitt 103 des Dichtelements 93 und der Mantelfläche 63 bzw. der Kontur 67 des Lagerrings 61.

Insgesamt kann das Lager 91 so die Axialsicherung des Dichtelements 93 am Lagerring 61 unabhängig von den radialen und den axialen Fertigungstoleranzen der jeweiligen Dichtkomponenten sicherstellen.

Das Dichtelement 93 weist zusätzlich eine Dichtlippe 105 auf, die zur Abdichtung des Lagerinnenraums im eingebauten Zustand schleifend am Außenumfang des zweiten Lagerrings des Wälzlagers 91 anliegt oder einen Spalt zum Außenumfang des zweiten Lagerrings aufweist. Der zweite Lagerring ist vorliegend nicht gezeigt.

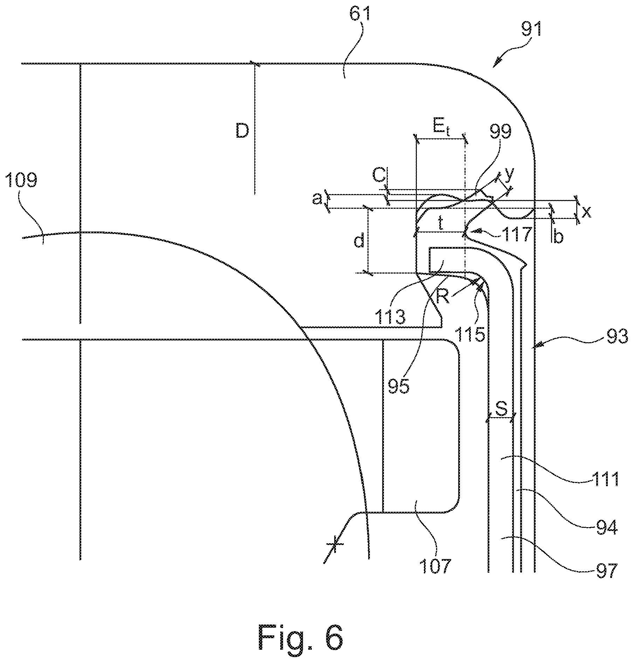

Fig. 6 zeigt das Lager 91 gemäß den Fig. 4 und 5 mit dem theoretisch in den Lagerring 61 eingesetzten Dichtelement 93. Man erkennt vorliegend deutlich den im Übergangsbereich 81 zwischen der axialen Anlagefläche 71 der Kontur 67 des Lagerrings 61 und dem Laufbahnabschnitt 79 axial umlaufenden Kragen 83, der der Verlängerung der Bordfläche 85 dient. Die Bordfläche 85 ermöglicht bei optimaler Nutzung des zur Verfügung stehenden Bauraums eine besonders sichere Führung des Wälzlagerkäfigs 107 und der in diesem geführten Wälzkörper 109.

Für die weitere Beschreibung des Lagers 91 wird an dieser Stelle auf die detaillierte Beschreibung zu den Fig. 3 bis 5 verwiesen.

In Fig. 6 wird auf die Bemaßungsparameter des Dichtelements 93 und des Lagerrings 61 bzw. der Kontur 67 des Hinterstichs 65 des Lagerrings 61 Bezug genommen. Zur Sicherstellung der Haltefunktion durch die Positionierung des Dichtelements 93 am Lagerring 61 und zur gewünschten Entkopplung der entsprechenden Form- und Maßtoleranzen sind die Abmessungen des Dichtelements 93 und des Lagerrings 61 zweckmäßigerweise aufeinander abgestimmt.

Die Armierung 97 des Dichtelements 93 hat einen im Wesentlichen ringförmigen Grundkörper 111 der Materialstärke s, sowie einen nach innen gegen die axiale Anlagefläche 71 des Hinterstichs 65 gerichteten Armierungsabschnitt 113. Der Krümmungsradius R am Übergang 115 zwischen dem Grundkörper 111 und dem Armierungsabschnitt 113 kann in einem Bereich zwischen 0,2 mm und 2·s liegen. Vorliegend hat der Krümmungsradius R einen Wert von 0,5 mm.

Die Dicke y der elastische Haltelippe 99 des Dichtelements 93 kann Werte zwischen 0,15 mm und 1,2·s annehmen und hat gemäß Fig. 6 einen Wert von 0,3 mm. Die radiale Dicke d des elastomeren Abschnitts 103 des Dichtelements 93, die insbesondere in einem Bereich zwischen 1,5·s und 4,5·s liegen kann, hat vorliegend einen Wert von 2,5 s.

Der Dichtkörper 94 des Dichtelements 93 geht in einem Übergangsbereich 117 in die elastische Haltelippe 99 über. In diesem Übergangsbereich 117 kann die axiale Dicke t in einem bevorzugten Bereich zwischen 0,5·d und 1·d liegen. Vorliegend hat die axiale Dicke t einen Wert von 0,7·d.

Die Einstichbreite Et des Hinterstichs 65 kann Werte annehmen, die sich in einem Bereich zwischen 0,8·t und 1,2·t bewegen. Vorliegend entspricht die Einstichbreite Et mit einem Wert von 1·t der axialen Dicke t im Übergangsbereich 117, in der der Dichtkörper 94 in die elastische Haltelippe 99 übergeht.

Der radiale Abstand a zwischen dem elastomeren Abschnitt 103 des Dichtelements 93 und dem Grund der radialen Freistellung 77, also dem radial tiefsten Punkt, ist abhängig vom Außendurchmesser D des Lagerrings 61. Der radiale Abstand a kann hierbei zweckmäßig in einem Bereich zwischen 0,03 mm und 0,004·D liegen, wobei er vorliegend einen Wert von 0,13 mm aufweist.

Der Absatz 73 des Anlageabschnitts 69 der Kontur 67 ist mit einem Abstand X im Hinterstich 65 radial zurückversetzt, wobei der Abstand X insbesondere in einem Bereich zwischen 0,5·y und 1,5·y liegen kann. Gemäß Fig. 6 hat der Abstand X einen Wert von 1·y. Der Abstand X entspricht vorliegend somit dem Wert der Dicke y der elastischen Haltelippe 99.

Die Haltelippe 99 erstreckt im entspannten Zustand mit einem Abstand C radial über den Absatz 73 des Anlageabschnitts 69 hinaus. Der Abstand C liegt hierbei zweckmäßigerweise in einem Bereich zwischen 0,02 mm und 2·y und hat vorliegend einen Wert von 0,7·y.

Der elastomere Abschnitt 103 des Dichtelements 93 ist mit einem radialen Abstand b im Hinterstich 65 zurückversetzt, wobei der radiale Abstand b bevorzugt in einem Bereich zwischen 0,03 mm bis 1,25·y liegt. Gemäß der vorliegenden Ausgestaltung hat der Abstand b einen Wert von 0,6·y.

### Bezugszeichenliste

- 1: Lagerring
- 3: Mantelfläche
- 5: Hinterstich
- 7: Kontur
- 9: Anlageabschnitt
- 10: Kontrollpunkt
- 11: axiale Anlagefläche
- 13: Freistellung
- 15: Laufbahnabschnitt
- 17: Übergangsbereich
- 19: Kragen
- 21: Bordfläche
- 31: Lagerring
- 33: Mantelfläche
- 35: Hinterstich
- 37: Kontur
- 39: Anlageabschnitt
- 40: Kontrollpunkt
- 41: axiale Anlagefläche
- 43: Freistellung
- 45: radiale Anlagefläche
- 47: Laufbahnabschnitt
- 49: Übergangsbereich
- 51: Kragen
- 53: Bordfläche
- 61: Lagerring
- 63: Mantelfläche
- 65: Hinterstich
- 67: Kontur
- 69: Anlageabschnitt
- 71: axiale Anlagefläche
- 73: Absatz
- 75: radialer Absatz
- 77: Freistellung
- 79: Laufbahnabschnitt
- 81: Übergangsbereich
- 83: Kragen
- 85: Bordfläche
- 91: Lager
- 93: Dichtelement
- 94: Dichtkörper
- 95: elastomere Komponente
- 97: Armierung
- 99: Haltelippe
- 101: axiale Anlagefläche
- 103: elastomerer Abschnitt
- 105: Dichtlippe
- 107: Wälzlagerkäfig
- 109: Wälzkörper
- 111: Grundkörper
- 113: Armierungsabschnitt
- 115: Übergang
- 117: Übergangsbereich

## Patentansprüche

1. Lager (91), insbesondere ein Radial-Wälzlager, umfassend einen Lagerring (61) mit einer durch mindestens einen Hinterstich (65) gebildeten Mantelfläche (63), sowie mit mindestens einem Dichtelement (93), das einen elastomeren Abschnitt (103) und eine elastischen Haltelippe (99) aufweist und mit seinem elastomeren Abschnitt (103) zumindest abschnittsweise in dem Hinterstich (65) aufgenommen ist, wobei die Mantelfläche (63) des Hinterstichs (65) eine Kontur (67) mit einem Anlageabschnitt (69) zur Axialsicherung der elastischen Haltelippe (99) sowie eine axiale Anlagefläche (71) aufweist, an der eine axiale Anlagefläche (101) des elastomeren Abschnitts (103) des Dichtelements (93) flächig anliegt und wobei der Anlageabschnitt (69) der Kontur (67) einen Absatz (73) aufweist, der die elastische Haltelippe (99) des Dichtelements (93) zu dessen Axialsicherung übergreift, **dadurch gekennzeichnet, dass** der Anlageabschnitt (69) des Hinterstichs (65) über einen zusätzlichen radialen Absatz (75) unmittelbar in eine zusätzliche radiale Freistellung (77) übergeht, mit der ein Spalt zwischen dem elastomeren Abschnitt (103) und der Kontur (67 des Hinterstichs (65) gebildet wird, durch den ein massiver Kontakt zwischen dem elastomeren Abschnitt (103) des Dichtelements (93) und der Kontur (67) des Hinterstichs (65) vermeidbar ist und der als Federweg-Reserve zum Ausgleich von Rundheitsfehlern sowohl des Hinterstichs (65) als auch des Dichtelementes (93) ausgebildet ist.

2. Lager (91) nach Anspruch 1, **dadurch gekennzeichnet, dass** die axiale Anlagefläche (71) des Hinterstichs (65) in einen Laufbahnabschnitt (79) übergeht.

3. Lager (91) nach Anspruch 2, **dadurch gekennzeichnet, dass** im Übergangsbereich (81) der axialen Anlagefläche (71) des Hinterstichs (65) in den Laufbahnabschnitt (79) ein umlaufender axialer Kragen (83) ausgebildet ist.

4. Lager (91) nach einem der vorhergehenden Ansprüche, **dadurch gekennzeichnet, dass** das Dichtelement (93) einen Dichtkörper (94) mit einer Armierung (97) aufweist.

5. Lager (91) nach Anspruch 4, **dadurch gekennzeichnet, dass** die Armierung (97) einen im Wesentlichen ringförmigen Grundkörper (111) der Materialstärke s, sowie einen nach innen gegen die axiale Anlagefläche (71) des Hinterstichs (65) gerichteten Armierungsabschnitt (113) aufweist, wobei der Krümmungsradius R am Übergang (115) zwischen dem Grundkörper (111) und dem Armierungsabschnitt (113) in einem Bereich zwischen 0,2 mm und 2·s liegt.

6. Lager (91) nach Anspruch 5, **dadurch gekennzeichnet, dass** die Dicke y der elastische Halterippe (99) des Dichtelements (93) in einem Bereich zwischen 0,15 mm und 1,2·s liegt.

7. Lager (91) nach Anspruch 5 oder 6, **dadurch gekennzeichnet, dass** die radiale Dicke d des elastomeren Abschnitts (103) des Dichtelements (93) in einem Bereich zwischen 1,5·s und 4,5·s liegt.

8. Lager (91) nach Anspruch 7, **dadurch gekennzeichnet, dass** der Dichtkörper (94) des Dichtelements (93) in einem Übergangsbereich (117) in die elastische Haltelippe (99) übergeht, wobei die axiale Dicke t im Übergangsbereich (117) in einem Bereich zwischen 0,5·d und 1·d liegt.

9. Lager (91) nach Anspruch 8, **dadurch gekennzeichnet, dass** die Einstichbreite Et des Hinterstichs (65) in einem Bereich zwischen 0,8·t und 1,2·t liegt.

10. Lager (91) einem der Ansprüche 2 bis 9, **dadurch gekennzeichnet, dass** der Lagerring (61) den Außendurchmesser D hat, wobei der radiale Abstand a zwischen dem elastomeren Abschnitt (103) des Dichtelements (93) und dem Grund der radialen Freistellung (77) in einem Bereich zwischen 0,03 mm und 0,004·D liegt.

11. Lager (91) nach einem der Ansprüche 6 bis 10, **dadurch gekennzeichnet, dass** der Absatz (73) des Anlageabschnitts (69) der Kontur (67) mit einem Abstand X im Hinterstich (65) radial zurückversetzt ist und wobei der Abstand X in einem Bereich zwischen 0,5·y und 1,5·y liegt.

12. Lager (91) nach einem der Ansprüche 6 bis 11, **dadurch gekennzeichnet, dass** sich die Haltelippe (99) im entspannten Zustand mit einem Abstand C radial über den Absatz (73) des Anlageabschnitts (69) hinaus erstreckt, wobei der Abstand C in einem Bereich zwischen 0,02 mm und 2·y liegt.

13. Lager (91) nach einem der Ansprüche 6 bis 12, **dadurch gekennzeichnet, dass** der elastomere Abschnitt (103) des Dichtelements (93) mit einem radialen Abstand b im Hinterstich (65) zurückversetzt ist, wobei der radiale Abstand b in einem Bereich zwischen 0,03 mm bis 1,25·y liegt.

14. Lager (91) nach einem der vorhergehenden Ansprüche, **dadurch gekennzeichnet, dass** es als Spindellager, insbesondere zum Einsatz in Werkzeugmaschinen, ausgebildet ist.

15. Lager (91) nach einem der vorhergehenden Ansprüche, **dadurch gekennzeichnet, dass** der Hinterstich (65) im äußeren Lagerring (61) eingebracht ist.

16. Lager (91) nach einem der Ansprüche 1 bis 14, **dadurch gekennzeichnet, dass** der Hinterstich (65) im inneren Lagerring eingebracht ist.

## Claims

1. Bearing (91), in particular a radial rolling bearing, comprising a bearing ring (61) with a lateral surface (63) formed by at least one undercut (65), and with at least one sealing element (93) which has an elastomer portion (103) and an elastic retaining lip (99) and is accommodated in the undercut (65) at least in certain portions by way of its elastomer portion (103), wherein the lateral surface (63) of the undercut (65) has a contour (67) with a contact portion (69) for axially securing the retaining lip (99), and an axial contact surface (71) on which an axial contact surface (101) of the elastomer portion (103) of the sealing element (93) lies flat, and wherein the contact portion (69) of the contour (67) has a shoulder (73) which engages over the elastic retaining lip (99) of the sealing element (93) to axially secure the latter, **characterized in that** the contact portion (69) of the undercut (65) merges via an additional radial shoulder (75) directly into an additional radial clearance (77), with which a gap is formed between the elastomer portion (103) and the contour (67) of the undercut (65), by means of which gap solid contact between the elastomer portion (103) of the sealing element (93) and the contour (67) of the undercut (65) can be avoided, and which gap is designed as a spring excursion reserve for compensating for roundness errors of both the undercut (65) and the sealing element (93).

2. Bearing (91) according to Claim 1, **characterized in that** the axial contact surface (71) of the undercut (65) merges into a raceway portion (79).

3. Bearing (91) according to Claim 2, **characterized in that** a circumferential axial collar (83) is formed in the transitional region (81) between the axial contact surface (71) of the undercut (65) and the raceway portion (79).

4. Bearing (91) according to one of the preceding claims, **characterized in that** the sealing element (93) has a sealing body (94) with a reinforcement (97).

5. Bearing (91) according to Claim 4, **characterized in that** the reinforcement (97) has a substantially annular basic body (111) of material thickness s, and a reinforcing portion (113) directed inwardly towards the axial contact surface (71) of the undercut (65), wherein the radius of curvature R at the transition (115) between the basic. body (111) and the reinforcing portion (113) lies in a range between 0.2 mm and 2·s.

6. Bearing (91) according to Claim 5, **characterized in that** the thickness y of the elastic retaining lip (99) of the sealing element (93) lies in a range between 0,15 mm and 1.2·s.

7. Bearing (91) according to Claim 5 or 6, **characterized in that** the radial thickness d of the elastomer portion (103) of the sealing element (93) lies in a range between 1.5·s and 4.5·s.

8. Bearing (91) according to Claim 7, **characterized in that** the sealing body (94) of the sealing element (93) merges into the elastic retaining lip (99) in a transition region (117), wherein the axial thickness t in the transition region (117) lies in a range between 0.5·d and 1·d.

9. Bearing (91) according to Claim 8, **characterized in that** the recess width Et of the undercut (65) lies in a range between 0.8·t and 1.2·t.

10. Bearing (91) one of Claims 2 to 9, **characterized in that** the bearing ring (61) has the outside diameter D, wherein the radial distance a between the elastomer portion (103) of the sealing element (93) and the bottom of the radial clearance (77) lies in a range between 0.03 mm and 0.004·D.

11. Bearing (91) according to one of Claims 6 to 10, **characterized in that** the shoulder (73) of the contact portion (69) of the contour (67) is set back radially in the undercut (65) by a distance X, and wherein the distance X lies in a range between 0.5·y and 1.5·y.

12. Bearing (91) according to one of Claims 6 to 11, **characterized in that,** in the relaxed state, the retaining lip (99) extends radially beyond the shoulder (73) of the contact portion (69) by a distance C, wherein the distance C lies in a range between 0.02 mm and 2·y.

13. Bearing (91) according to one of Claims 6 to 12, **characterized in that** the elastomer portion (103) of the sealing element (93) is set back in the undercut (65) by a radial distance b, wherein the radial distance b lies in a range between 0.03 mm to 1.25·y.

14. Bearing (91) according to one of the preceding claims, **characterized in that** it is designed as a spindle bearing, in particular for use in machine tools.

15. Bearing (91) according to one of the preceding claims, **characterized in that** the undercut (65) is incorporated in the outer bearing ring (61).

16. Bearing (91) according to one of Claims 1 to 14, **characterized in that** the undercut (65) is incorporated in the inner bearing ring.

## Revendications

1. Palier (91), en particulier un palier à roulement radial, comprenant une bague de palier (61) avec une surface de gainage (63), laquelle est formée par au moins une dépouille au tour (65), ainsi qu'avec au moins un élément d'étanchéité (93), lequel présente une section en élastomère (103) et une lèvre de retenue (99) élastique et lequel est logé, tout au moins par section, dans la dépouille au tour (65) au moyen de sa section en élastomère (103) ;
dans lequel la surface de gainage (63) de la dépouille au tour (65) présente un contour (67) avec une section d'appui (69) en vue du blocage axial de la lèvre de retenue (99) élastique, ainsi qu'une surface d'appui axiale (71), contre laquelle une surface d'appui (101) axiale de la section en élastomère (103) de l'élément d'étanchéité (93) vient prendre appui de manière plane ;
et
dans lequel la section d'appui (69) du contour (67) présente un palier de repos (73) qui vient recouvrir la lèvre de retenue (99) élastique de l'élément d'étanchéité (93) en vue de son blocage axial ;
**caractérisé en ce que** la section d'appui (69) de la dépouille au tour (65) passe directement dans une position de dégagement (77) radiale supplémentaire, à travers un palier de repos (75) radial supplémentaire, position de dégagement au moyen de laquelle une fente est formée entre la section en élastomère (103) et le contour (67) de la dépouille au tour (65), fente à travers laquelle un contact massif peut être évité entre la section en élastomère (103) de l'élément d'étanchéité (93) et le contour (67) de la dépouille au tour (65) et laquelle fente se présente sous la forme d'une réserve de la course de suspension en vue de la compensation des erreurs de sphéricité, tant de la dépouille au tour (65) que de l'élément d'étanchéité (93).

2. Palier (91) selon la revendication 1, **caractérisé en ce que** la surface d'appui (71) axiale de la dépouille au tour (65) passe dans une section de cage interne (79).

3. Palier (91) selon la revendication 2, **caractérisé en ce que**, dans la zone de passage (81) de la surface d'appui (71) axiale de la dépouille au tour (65), une collerette circonférentielle (83) axiale est conçue dans la section de cage interne (79).

4. Palier (91) selon l'une des revendications précédentes, **caractérisé en ce que** l'élément d'étanchéité (93) présente un corps d'étanchéité (94) avec un renforcement (97).

5. Palier (91) selon la revendication 4, **caractérisé en ce que** le renforcement (97) présente un corps de base (111), pour l'essentiel de forme annulaire, de l'épaisseur du matériau « s », ainsi qu'une section de renforcement (113), laquelle est orientée vers l'intérieur, contre la surface d'appui (71) axiale de la dépouille au tour (65) ;
dans lequel le rayon de courbure « R » se trouvant entre le corps de base (111) et la section de renforcement (113), au niveau du passage (115), se situe dans une plage comprise entre 0,2 mm et 2•s.

6. Palier (91) selon la revendication 5, **caractérisé en ce que** l'épaisseur « y » de la lèvre de retenue (99) élastique de l'élément d'étanchéité (93) se situe dans une plage comprise entre 0,15 mm et 1,2•s.

7. Palier (91) selon la revendication 5 ou 6, **caractérisé en ce que** l'épaisseur radiale « d » de la section en élastomère (103) de l'élément d'étanchéité (93) se situe dans une plage comprise entre 1,5•s et 4,5•s.

8. Palier (91) selon la revendication 7, **caractérisé en ce que** le corps d'étanchéité (94) de l'élément d'étanchéité (93) passe dans une zone de passage (117) dans la lèvre de retenue (99) élastique, dans lequel l'épaisseur axiale « t » dans la zone de passage (117) se situe dans une plage comprise entre 0,5•d et 1•d.

9. Palier (91). selon la revendication 8, **caractérisé en ce que** la largueur de piquage « Et » de la dépouille au tour (65) se situe dans une plage comprise entre 0,8•t et 1,2•t.

10. Palier (91) l'une des revendications 2 à 9, **caractérisé en ce que** la bague de palier (61) possède le diamètre externe « D », dans lequel la distance radiale « a » entre la section en élastomère (103) de l'élément d'étanchéité (93) et la base de la position de dégagement (77) radiale se situe dans une plage comprise entre 0,03 mm et 0,004•D.

11. Palier (91) selon l'une des revendications 6 à 10, **caractérisé en ce que** le palier de repos (73) de la section d'appui (69) du contour (67) est décalé vers l'arrière de manière radiale, avec une distance « X » dans la dépouille au tour (65), et dans lequel la distance « X » se situe dans une plage comprise entre 0,5•y et 1,5•y.

12. Palier (91) selon l'une des revendications 6 à 11, **caractérisé en ce que**, à l'état détendu, la lèvre de retenue (99) s'étend de manière radiale sur une distance « C » au delà du palier de repos (73) de la section d'appui (69), dans lequel la distance « C » se situe dans une plage comprise entre 0,02 mm et 2•y.

13. Palier (91) selon l'une des revendications 6 à 12, **caractérisé en ce que** la section en élastomère (103) de l'élément d'étanchéité (93) est décalée vers l'arrière avec une distance radiale « b » dans la dépouille au tour (65), dans lequel la distance radiale « b » se situe dans une plage comprise entre 0,03 mm et 1,25•y.

14. Palier (91) selon l'une des revendications précédentes, **caractérisé en ce que** ledit palier est conçu sous la forme d'un coussinet de broche, en particulier en vue d'être mis en place dans des machines-outils.

15. Palier (91) selon l'une des revendications précédentes, **caractérisé en ce que** la dépouille au tour (65) est mise en place dans la bague de palier (61) externe.

16. Palier (91) selon l'une des revendications 1 à 14, **caractérisé en ce que** la dépouille au tour (65) est mise en place dans la bague de palier interne.
